Europäisches Patentamt

**European Patent Office**

Office européen des brevets

(11) Veröffentlichungsnummer: **0 021 046**
**B1**

## EUROPÄISCHE PATENTSCHRIFT

(45) Veröffentlichungstag der Patentschrift:
07.09.83

(51) Int. Cl.³ **B 23 K 3/02**

(21) Anmeldenummer: **80102832.5**

(22) Anmeldetag **21.05.80**

(54) Elektronisch geregelter Lötkolben.

(30) Priorität: **23.05.79 DE 2921062**

(43) Veröffentlichungstag der Anmeldung:
**07.01.81 Patentblatt 81/1**

(45) Bekanntmachung des Hinweises auf die Patenterteilung:
**07.09.83 Patentblatt 83/36**

(84) Benannte Vertragsstaaten.
**FR GB IT**

(56) Entgegenhaltungen
**EP-A-0 004 035
DE-A-2 847 482
FR-A-2 159 781
US-A-2 951 927
US-A-4 055 744
ELEKTRO, Band 4, Nr. 7/8, Juli—August 1978,
Canterbury, GB »Electronic soldering iron« Seiten
7—70**

(73) Patentinhaber: **Cooper Industries Inc., Two Houston
Center, Houston Texas 77002 (US)**

(72) Erfinder: **Rittmann, Günter, Eberhardstrasse 8,
D-7121 Löchgau (DE)**
Erfinder: **Goerlich, Peter, Gutenbergstrasse 6,
D-7122 Besigheim (DE)**

(74) Vertreter: **Wallach, Curt, Dipl.-Ing. et al, Patentanwalte
Dipl.-Ing. Curt Wallach Dipl.-Ing. Gunther Koch,
Dipl.-Phys. Dr. Tino Haibach, Dipl.-Ing. R. Feldkamp
Postfach 920, D-8000 München 33 (DE)**

## Elektronisch geregelter Lötkolben

Die Erfindung bezieht sich auf einen elektronisch geregelten Lötkolben mit einem an einem Handgriff befestigten langgestreckten Heizkörper, der an seinem vom Handgriff abgewandten Ende ein Heizelement aufweist, mit einem Temperaturfühler zur Messung der Temperatur des Heizelementes bzw. der hiervon beheizten Lötspitze, mit einer Steuerelektronik, die von dem Temperaturfühler angesteuert wird und einen Halbleiter-Leistungsschalter ansteuert, der zur Steuerung des durch das Heizelement fließenden Stromes dient, wobei der Halbleiter-Leistungsschalter und die Steuerelektronik im Inneren des Handgriffes des Lötkolbens angeordnet sind, und mit einem Befestigungsteil zur Befestigung des Heizkörpers an dem Handgriff.

Es sind Lötkolben bekannt, bei denen das im Heizkörper angeordnete Heizelement sowie der Temperaturfühler über getrennte Verbindungen mit einer Lötstation verbunden sind, die den Schutztransformator und die Steuerelektronik enthält. Zur Verbindung des Lötkolbens mit der Lötstation ist daher ein vieladriges Kabel erforderlich, da in den meisten Fällen noch ein zusätzlicher Erd- oder Schutzleiter in dem Kabel mitgeführt werden muß. Ein derartiges vieladriges Kabel muß zur Erzielung einer ausreichenden Sicherheit gegen eine Unterbrechung einzelner Leiter aufgrund von Materialermüdung relativ stark ausgebildet sein, so daß sich ein relativ starres Kabel ergibt, das die Handhabung des Lötkolbens behindern kann. Andererseits ergibt jedoch die Anordnung der Steuerelektronik in gewissem Abstand von dem eigentlichen Lötkolben die Möglichkeit, geeignete Kühlmaßnahmen für die Steuerelektronik vorzusehen, was von erheblicher Bedeutung sein kann.

Es ist weiterhin ein elektrisch geregelter Lötkolben der eingangs genannten Art bekannt (US-Patentschrift 4 055 744), bei der die Steuerelektronik im Handgriff des Lötkolbens angeordnet ist. Zur Erzielung einer ausreichenden Wärmeableitung, insbesondere für den den Speisestrom des Heizelementes steuernden Halbleiter-Leistungsschalter, ist hierbei vorgesehen, das am hinteren Ende des Handgriffs des Lötkolbens austretende Kabel mit einem relativ starken Metallgeflecht zu umgeben, das bis auf die Leiterplatte geführt und auf dieser abgeflacht ist, so daß auf diesem abgeflachten Teil des Metallgeflechts der Halbleiter-Leistungsschalter angeordnet werden kann und eine Wärmeableitung von diesem Halbleiter-Leistungsschalter über das Metallgeflecht erfolgt. Das Metallgeflecht, das am hinteren Ende des Handgriffs frei zugänglich ist, kann hierbei eine erhebliche Temperatur annehmen, was bei der Bedienung des Lötkolbens unangenehm sein kann. Weiterhin befindet sich die gesamte übrige Steuerelektronik zwischen dem Halbleiter-Leistungsschalter und dem Heizkörper, so daß erhebliche Temperatureinflüsse auf diese Steuerelektronik einwirken, was aus Gründen der Regelgenauigkeit unerwünscht ist.

Der Erfindung liegt die Aufgabe zugrunde, einen Lötkolben der eingangs genannten Art zu schaffen, bei dem das Problem der Wärmeableitung, insbesondere des Halbleiter-Leistungsschalters, sowie der Schutz der Steuerelektronik gegen Temperatureinflüsse in besserer Weise gelöst ist.

Diese Aufgabe wird erfindungsgemäß dadurch gelöst, daß der Halbleiter-Leistungsschalter an dem von dem Heizkörper abgewandten Ende des als Kühlkörper ausgebildeten Befestigungsteils wärmeleitend befestigt ist.

Die wärmeleitende Verbindung des Halbleiter-Leistungsschalters ermöglicht überraschenderweise eine ausreichende Kühlung des Leistungshalbleiters, da das von dem Heizelement abgewandte Ende des Heizkörpers und insbesondere dessen Befestigungsflansch ausreichend niedrige Temperaturen aufweisen, die im Betriebsbereich derartiger Halbleiter-Leistungsschalter liegen. Durch die Anordnung des Halbleiter-Leistungsschalters an dem dem Heizkörper zugewandten Ende des Handgriffs kann die gesamte übrige Steuerelektronik im Handgriff an dem vom Heizkörper und dem Halbleiter-Leistungsschalter abgewandten Ende angeordnet werden, so daß die Temperatureinflüsse verringert werden.

Gemäß einer Ausgestaltung der Erfindung ist das Befestigungsteil des Heizkörpers durch einen mit dem Heizkörper verbundenen Befestigungsflansch gebildet, der mit dem Halbleiter-Leistungsschalter wärmeleitend verbunden ist.

Gemäß einer weiteren Ausgestaltung der Erfindung ist das den Kühlkörper bildende Befestigungsteil durch einen Befestigungsflansch am Heizkörper und eine dem Handgriff zugewandte Metallplatte gebildet, wobei zwischen dem Befestigungsflansch und der Metallplatte Distanzscheiben zur Bildung eines Luftspaltes zwischen dem Befestigungsflansch und der Metallplatte angeordnet sind.

Hierbei ist es möglich, die Metallplatte in ihrem mittleren Bereich mit einem in das Innere des Handgriffs umgebogenen ausgestanzten Abschnitt zu versehen, an dem der Halbleiter-Leistungsschalter wärmeleitend befestigt ist. Hierdurch ergibt sich eine besonders einfache Herstellung und Montage des Lötkolbens. Bei Ausbildung der Steuerelektronik in Form einer gedruckten Schaltung auf einer Leiterplatte ist vorzugsweise vorgesehen, daß der Halbleiter-Leistungsschalter ebenfalls auf der Leiterplatte angeordnet ist und daß die Leiterplatte ebenfalls zusammen mit dem Halbleiter-Leistungsschalter an dem ausgestanzten Abschnitt befestigt ist.

Gemäß einer Ausgestaltung der Erfindung erstreckt sich der Temperaturfühler im Inneren des Heizkörpers und zwischen dem Temperaturfühler, und dem an dem Handgriff befestigten Ende des Heizkörpers ist eine Druckfeder angeordnet, die den Temperaturfühler gegen die in die dem entgegengesetzten Ende des Heizkörpers angeordnete Lötspitze vorspannt.

Gemäß einer anderen Ausgestaltung der Erfindung ist der Temperaturfühler am vorderen, das Heizelement tragenden Ende des Heizkörpers und im Inneren des Heizelementes an der Innenfläche an einer Wand des Heizelementes angeordnet, deren Außenfläche an der Lötspitze anliegt. Hierdurch ergibt sich eine schnellere Erkennung von Temperaturänderungen an der Lötstelle.

Bei Verwendung eines Thermoelementes als Meßfühler ist vorzugsweise im Handgriff eine Temperaturkompensation angeordnet, die schwankende Temperaturen im Handgriff kompensiert, so daß keine Meßwertverfälschung des Ist-Wertes auftritt. Hierdurch können im Bereich der Steuerelektronik auftretende Temperaturänderungen noch besser ausgeglichen werden.

Diese Temperaturkompensation kann durch einen entsprechend festgelegten Widerstandsdraht und/oder einen Halbleiter ausgebildet sein.

Eine besondere Vereinfachung des Lötkolbens ergibt sich auch dadurch, daß das Heizelement mit Wechselstrom gespeist wird und daß ein Gleichrichter zur Speisung der Steuerelektronik aus dieser Wechselspannung vorgesehen ist.

Gemäß einer weiteren bevorzugten Ausgestaltung der Erfindung trägt das von dem Heizkörper abgewandte Ende des den Kühlkörper bildenden Befestigungsteils eine integrierte Hybridschaltung, die die Steuerelektronik und den Halbleiter-Leistungsschalter einschließt.

Die Hybridschaltung ist hierbei vorzugsweise mit dem Kühlkörper einstückig vereinigt.

Die Erfindung wird im folgenden anhand von in der Zeichnung dargestellten Ausführungsbeispielen noch näher erläutert.

In der Zeichnung zeigt

Fig. 1 eine teilweise geschnittene Ansicht einer Ausführungsform des elektronisch geregelten Lötkolbens,

Fig. 2 eine gegenüber der Fig. 1 um 90° um die Längsachse gedrehte Teilschnittansicht des Lötkolbens nach Fig. 1,

Fig. 3 eine Ansicht einer weiteren Ausführungsform des Lötkolbens,

Fig. 4 eine Schnittansicht, die in vergrößertem Maßstab den mit IV bezeichneten Teil der Fig. 1 einer abgeänderten Ausführungsform des Heizkörpers, des Heizelementes und des Wärmefühlers zeigt.

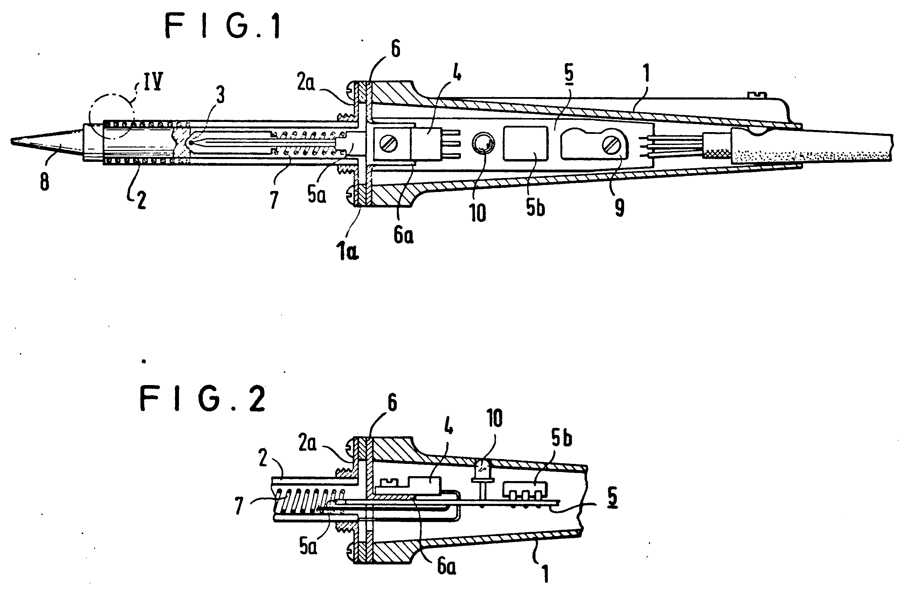

Die in Fig. 1 gezeigte Ausführungsform des elektronisch geregelten Lötkolbens weist einen Handgriff 1 auf, an dessen vorderem Ende ein Heizkörper 2 befestigt ist, in das eine Lötspitze 8 teilweise einschiebbar ist, wobei die Lötspitze 8 durch eine nicht dargestellte Überwurfhülse in dem Heizkörper 2 festgehalten wird. Der Heizkörper ist langgestreckt und beispielsweise rohrförmig ausgebildet und lediglich an seinem vorderen, die Lötspitze umgebenden Ende mit einem Heizelement versehen. An dem von der Lötspitze 8 abgewandten Ende trägt der rohrförmige Heizkörper einen Befestigungsflansch 2a an dem bei der dargestellten Ausführungsform weiterhin ein Außengewinde zur Befestigung der nicht gezeigten Überwurfhülse zur Befestigung der Lötspitze angeordnet ist. Der Flansch 2a ist über Distanzscheiben 1a und eine Metallplatte 6 mit Hilfe von Schrauben an dem Handgriff 1 befestigt. Die Metallplatte 6 dient als Kühlflansch und weist einen ausgestanzten und in das Innere des Handgriffes 1 umgebogenen Teil 6a auf, der sowohl zur Befestigung des Halbleiter-Leistungsschalters 4 beispielsweise in Form eines Triac als auch der die Steuerelektronik tragenden Leiterplatte 5 dient. Die Leiterplatte dringt mit einem vorderen, eine geringere Breite aufweisenden Ende 5a durch die Metallplatte 6 hindurch in das Innere des Heizkörpers vor und an diesem vorderen Ende 5a stützt sich eine Druckfeder 7 ab, die einen Temperaturfühler 3 gegen das hintere Ende der Lötspitze 8 vorspannt, um eine schnelle und sichere Wärmeübertragung zwischen der Lötspitze 8 und dem Temperaturfühler 3 zu erzielen.

Gegebenenfalls könnte auch der Temperaturfühler 3 starr an dem vorderen Ende der Leiterplatte 5 befestigt sein, wobei in diesem Falle die Leiterplatte 5 gegenüber der Metallplatte 6 verschiebbar angeordnet wäre und durch eine am hinteren Ende der Leiterplatte angeordnete Druckfeder insgesamt zusammen mit dem Temperaturfühler in Richtung auf die Lötspitze 8 vorgespannt würde.

Der Befestigungsflansch 2a des Heizkörpers 2 bildet zusammen mit der Metallplatte 6 einen Kühlkörper, der zur Abführung der von dem Heizelement zum Handgriff weitergeleiteten Wärme sowie zur Ableitung der Verlustwärme des Halbleiter-Leistungsschalters dient. Der so gebildete Kühlkörper kann selbstverständlich auch auf andere Weise ausgebildet sein, beispielsweise in Form eines zylindrischen mit umlaufenden Rippen versehenen Kühlkörpers, der an einem Ende mit dem Heizkörper und am anderen Ende mit dem Halbleiter-Leistungsschalter verbunden ist.

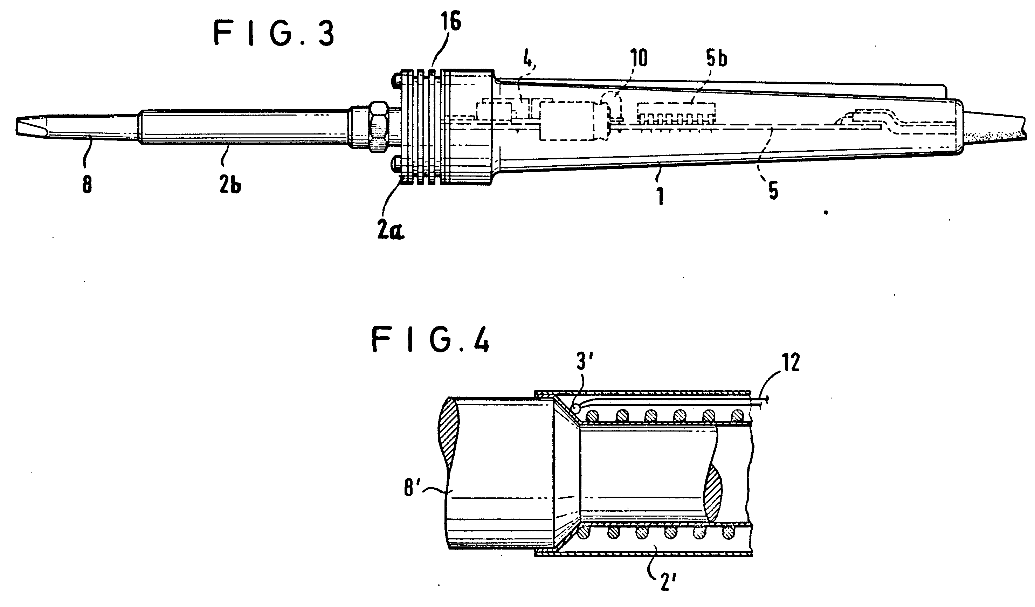

Ein Beispiel für eine derartige Ausführungsform des Lötkolbens ist in Fig. 3 dargestellt. Hierbei ist der Befestigungsflansch 2a des Heizkörpers an einem zylindrischen mit umlaufenden Rippen versehenen Kühlkörper befestigt, der an seinem anderen axialen Ende Befestigungseinrichtungen zur wärmeleitenden Befestigung des Halbleiter-Leistungsschalters 4 trägt. Bei der Ausführungsform nach Fig. 3 ist weiterhin ein Beispiel für die Überwurfhülse 2b dargestellt, die die Lötspitze am vorderen Ende des Heizkörpers hält.

Die in Fig. 3 dargestellte Ausführungsform des Kühlkörpers 16 stellt lediglich eine Möglichkeit für die Ausgestaltung dieses Kühlkörpers als getrenntes oder gegebenenfalls einstückig mit dem Befestigungsflansch des Heizkörpers ausgebildetes Element dar.

Bei beiden Ausführungsformen trägt die Leiterplatte die gesamte Steuerelektronik, der das Ausgangssignal des Temperaturfühlers 3 zugeführt wird und die den Halbleiter-Leistungsschalter 4 in Abhängigkeit von dem Ausgangssignal des Temperaturfühlers 3 so ansteuert, daß eine gewünschte Temperatur der Lötspitze 8 aufrechterhalten wird. Diese Steuerelektronik kann beispielsweise eine integrierte Schaltung 5b und ein Potentiometer 9 zur Einstellung der gewünschten Temperatur sowie gegebenenfalls einen Gleichrichter zur Gleichrichtung der Versorgungsspannung für die integrierte Schaltung aus der Speisespannung für das Heizelement einschließen. Der Halbleiter-Leistungsschalter ist mit seinen Anschlüssen mit auf dieser Leiterplatte angeordnet, so daß sich eine sehr kompakte Anordnung ergibt. Die Leiterplatte 5 kann weiterhin eine Leuchtdiode 10 zur Anzeige des Heizvorganges tragen.

Der Anschluß des gesamten Lötkolbens kann auf Grund der Anordnung der Steuerelektronik und des Halbleiter-Leistungsschalters in dem Handgriff 1 über ein einfaches dreiadriges Zuleitungskabel erfolgen, von dem zwei Adern zur Zuführung des Speisestroms dienen, während die dritte Ader als Schutz- oder Erdungsleiter dienen kann.

Bei den Ausführungsformen nach den Fig. 1 bis 3 ist der Temperaturfühler 3 gegen eine Ausnehmung in der Lötspitze 8 vorgespannt. In Fig. 4 ist eine weitere Ausführungsform des Temperaturfühlers 3′ gezeigt, bei der dieser im Inneren des Heizelementes, des Heizkörpers 2′ an dessen vorderen Ende derart befestigt ist, daß er sich praktisch auf der gleichen Temperatur befindet, wie die Lötspitze 8′. Dieser Temperaturfühler ist in diesem Fall vorzugsweise als Thermoelement ausgebildet und über Verbindungsleitungen 12 mit der Steuerelektronik verbunden. In dem Handgriff 1 kann hierbei eine Temperaturkompension vorgesehen sein, um schwankende Temperaturen im Griff, wie sie bei schwankender Umgebungstemperatur oder verschiedener Haltung des Griffes entstehen, zu kompensieren, so daß keine Meßwertverfälschung des Ist-Wertes auftritt. Diese Temperaturkompensation kann in Form eines entsprechend festgelegten Widerstandsdrahtes oder mit Hilfe eines Halbleiters erfolgen.

Durch die Anordnung des Temperaturfühlers 3′ an der vorderen Spitze des Heizkörpers und damit in unmittelbarer Nähe der Lötspitze ergibt sich eine Verlagerung des Temperaturmeßpunktes zum Lötpunkt an der Lötspitze selbst hin, so daß eine genauere Messung und ein schnelleres Ansprechen der Regelelektronik während des Lötvorganges erfolgen kann.

**Patentansprüche**

1. Elektronisch geregelter Lötkolben mit einem an einem Handgriff (1) befestigten langgestreckten Heizkörper (2), der an seinem vom Handgriff (1) abgewandelten Ende ein Heizelement aufweist, mit einem Temperaturfühler (3) zur Messung der Temperatur des Heizelementes bzw. der hiervon beheizten Lötspitze (8), mit einer Steuerelektronik, die von dem Temperaturfühler (3) angesteuert wird und einen Halbleiter-Leistungsschalter (4) ansteuert, der zur Steuerung des durch das Heizelement fließenden Stromes dient, wobei der Halbleiter-Leistungsschalter (4) und die Steuerelektronik im Inneren des Handgriffes (1) des Lötkolbens angeordnet sind, und mit einem Befestigungsteil zur Befestigung des Heizkörpers (2) an dem Handgriff (1), dadurch gekennzeichnet, daß der Halbleiter-Leistungsschalter (4) an dem von dem Heizkörper (2) angewandten Ende des als Kühlkörper ausgebildeten Befestigungsteils (2a, 1a, 6; 16) wärmeleitend befestigt ist.

2. Lötkolben nach Anspruch 1, dadurch gekennzeichnet, daß das Befestigungsteil durch einen mit dem Heizkörper (2) verbundenen Befestigungsflansch (2a) gebildet ist, mit dem der Halbleiter-Leistungsschalter (4) wärmeleitend verbunden ist.

3. Lötkolben nach Anspruch 1, dadurch gekennzeichnet, daß das den Kühlkörper bildende Befestigungsteil durch einen Befestigungsflansch (2a) am Heizkörper und eine dem Handgriff (1) zugewandte Metallplatte (6) gebildet ist, und daß zwischen dem Befestigungsflansch (2a) und der Metallplatte (6) Distanzscheiben (1a) zur Bildung eines Luftspaltes zwischen dem Befestigungsflansch (2a) und der Metallplatte (6) angeordnet sind.

4. Lötkolben nach Anspruch 3, dadurch gekennzeichnet, daß die Metallplatte (6) in ihrem mittleren Bereich einen in das Innere des Handgriffs (1) umgebogenen ausgestanzten Abschnitt (6a) aufweist, an dem der Halbleiter-Leistungsschalter (4) wärmeleitend befestigt ist.

5. Lötkolben nach Anspruch 3 oder 4, dadurch gekennzeichnet, daß die Steuerelektronik in Form einer gedruckten Schaltung auf einer Leiterplatte (5) ausgebildet ist, daß der Halbleiter-Leistungsschalter (4) ebenfalls auf der Leiterplatte (5) angeordnet ist und daß die Leiterplatte (5) ebenfalls an dem ausgestanzten Abschnitt (6a) befestigt ist.

6. Lötkolben nach einem der vorhergehenden Ansprüche, dadurch gekennzeichnet, daß sich der Temperaturfühler (3) im Inneren des Heizkörpers erstreckt und daß zwischen dem Temperaturfühler (3) und dem an dem Handgriff (1) befestigten Ende des Heizkörpers (2) eine Druckfeder (7) angeordnet ist, die den Temperaturfühler (3) gegen die in dem entgegengesetzten Ende des Heizkörpers (2) angeordnete Lötspitze (8) vorspannt.

7. Lötkolben nach einem der Ansprüche 1 bis 5, dadurch gekennzeichnet, daß der Temperaturfühler (3′) am vorderen, das Heizelement tragenden Ende des Heizkörpers (2′) und im Inneren des Heizelementes an der Innenfläche einer Wand des Heizelementes angeordnet ist, deren Außenfläche an der Lötspitze (8') anliegt.

8. Lötkolben nach einem der vorhergehenden Ansprüche, dadurch gekennzeichnet, daß der Meßfühler ein Thermoelement ist, und daß im Handgriff (1) eine Temperaturkompensation angeordnet ist, die schwankende Temperaturen im Handgriff kompensiert, so daß keine Meßwertverfälschung des Ist-Wertes auftritt.

9. Lötkolben nach Anspruch 8, dadurch gekennzeichnet, daß die Temperaturkompensation durch einen entsprechend festgelegten Widerstandsdraht und/oder einen Halbleiter ausgebildet ist.

10. Lötkolben nach einem der vorhergehenden Ansprüche, dadurch gekennzeichnet, daß das Heizelement (2) mit Wechselspannung gespeist ist und daß ein Gleichrichter zur Speisung der Steuerelektronik (5) aus dieser Wechselspannung vorgesehen ist.

11. Lötkolben nach einem der Ansprüche 1 und 6 bis 10, dadurch gekennzeichnet, daß das von dem Heizkörper (2) abgewandte Ende des den Kühlkörper bildenden Befestigungsteils (16) eine integrierte Hybridschaltung trägt, die die Steuerelektronik und den Halbleiter-Leistungsschalter einschließt.

12. Lötkolben nach Anspruch 11, dadurch gekennzeichnet, daß die Hybridschaltung mit dem Kühlkörper einstückig vereinigt ist.

### Claims

1. An electronically regulated soldering iron comprising an elongate heated body (2) secured to a handle (1), the heated body having a heating element at its end remote from the handle (1); a temperature sensor (3) for measuring the temperature of the heating element or the soldering tip (8) heated thereby; an electronic control which is controlled by the temperature sensor (3) and which controls a semiconductor power switch (4) which serves to control the current flowing through the heating element, with the semiconductor power switch (4) and the electronic control being arranged in the inside of the handle (1); and a securing part for securing the heated body (2) to the handle (1) characterised in that the semiconductor power switch (4) is thermally conductively secured to the end of the securing part (1a, 2a, 6; 16) remote from the heated body (2), with the securing part being constructed as a cooling body.

2. A soldering iron in accordance with claim 1 and characterised in that the securing part is formed by a securing flange (2a) connected to the heated body (2), with the semiconductor power switch (4) being thermally conductively connected to the securing flange.

3. A soldering iron in accordance with claim 1 and characterised in that the securing part forming the cooling body is formed by a securing flange (2a) at the heated body and a metal plate (6) facing the handle (1); and in that spacer washers (1a) are arranged between the securing flange (2a) and the metal plate (6) to form an air gap therebetween.

4. A solfering iron in accordance with claim 3 and characterised in that the metal plate (6) has a portion (6a) in its central region which is stamped out and bent around into the interior of the handle (1) with the semiconductor power switch (4) being thermally conductively connected to this stamped out portion.

5. A soldering iron in accordance with claim 3 or claim 4 and characterised in that the electronic control takes the form of a printed circuit on a circuit board (5); in that the semiconductor power switch (4) is likewise arranged on the circuit board (5); and in that the circuit board (5) is likewise secured to the stamped out portion (6a).

6. A soldering iron in accordance with one of the preceding claims and characterised in that the temperature sensor (3) extends in the interior of the heated body; and in that a compression spring (7) is arranged between the temperature sensor (3) and the end of the heated body secured to the handle (1), with the compression spring biasing the temperature sensor (3) against the soldering tip (8) arranged in the opposite end of the heated body (2).

7. A soldering iron in accordance with one of the claims 1 to 5 and characterised in that the temperature sensor (3') is arranged at the front end of the heated body (2') which carries the heating element and in the inside of the heating element at the inner surface of a wall of the heating element, with the outer surface of this wall contacting the soldering tip (8').

8. A soldering iron in accordance with one of the preceding claims and characterised in that the measuring sensor is a thermocouple; and in that a temperature compensation device is arranged in the handle (1), the temperature compensation device compensating for fluctuating temperatures in the handle so that no falsification of the measured level of the actual value occurs.

9. A soldering iron in accordance with claim 8 and characterised in that the temperature compensation device is contructed by an appropriately specified resistive wire and/or a semiconductor.

10. A soldering iron in accordance with one of the preceding claims and characterised in that the heating element (2) is fed with a.c. voltage; and in that a rectifier is provided to feed the electronic control (5) from this a.c. voltage.

11. A soldering iron in accordance with one of the claims 1 and 6 to 10 characterised in that the end of the securing part (16) which is remote from the heated body (2) and which forms the cooling body carries an integrated hybrid circuit which includes the electronic control and the semiconductor power switch.

12. A soldering iron in accordance with claim 11 and characterised in that the hybrid circuit is united in one piece with the cooling body.

## Revendications

1. Fer à souder à réglage électronique comprenant un corps chauffant (2) allongé, fixé à une poignée (1) et présentant un élément chauffant à son extrémité opposée à la poignée (1), un capteur de température (3) pour mesurer la température de l'élément chauffant ou de la panne (8) chauffée par cet élément, un système électronique de commande qui est commandé par le capteur de température (3) et commande un interrupteur de puissance à semi-conducteur (4) servant à commander le courant traversant l'élément chauffant, l'interrupteur de puissance à semi-conducteur (4) et le système électronique de commande étant disposés à l'intérieur de la poignée (1) du fer à souder, et une partie de fixation pour la fixation du corps chauffant (2) à la poignée (1), caractérisé par le fait que l'interrupteur de puissance à semi-conducteur (4) est fixé de façon thermiquement conductrice à l'extrémité, opposée au corps chauffant (2), de la partie de fixation (1a, 2a, 6; 16) réalisée sous forme de corps de refroidissement.

2. Fer à souder suivant la revendication 1, caractérisé par le fait que la partie de fixation est formée par une bride de fixation (2a) reliée au corps chauffant (2) et reliée de façon thermiquement conductrice à l'interrupteur de puissance à semi-conducteur (4).

3. Fer à souder suivant la revendication 1, caractérisé par le fait que la partie de fixation formant le corps de refroidissement est constitué par une bride de fixation (2a) sur le corps chauffant et une plaque métallique (6) tournée vers la poignée (1) et que des rondelles d'espacement (1a) sont disposées entre la bride de fixation (2a) et la plaque métallique (6) en vue de la formation d'un intervalle entre la bride de fixation (2a) et la plaque métallique (6).

4. Fer à souder suivant la revendication 3, caractérisé par le fait que la plaque métallique (16) présente, par sa partie centrale, une section découpée (6a) qui est pliée vers l'intérieur de la poignée (1) et à laquelle est fixé de façon conductrice de la chaleur l'interrupteur de puissance à semiconducteur (4).

5. Fer à souder suivant la revendication 3 ou 4, caractérisé par le fait que le système électronique de commande est réalisé sous la forme d'un circuit imprimé sur une plaque conductrice (5), que l'interrupteur de puissance à semi-conducteur (4) est disposé également sur la plaque (5) et que la plaque (5) est également fixée à la section découpée (6a).

6. Fer à souder suivant l'une des revendications précédentes, caractérisé par le fait que le capteur de température (3) s'étend à l'intérieur du corps chauffant et qu'entre le capteur de température (3) et l'extrémité du corps chauffant (2) fixée à la poignée (1) est disposé un ressort de compression (7) qui précontraint le capteur de température (3) contre la panne (8) disposée dans l'extrémité opposée du corps chauffant (2).

7. Fer à souder suivant l'une des revendications 1 à 5, caractérisé par le fait que le capteur de température (3') est disposé à l'extrémité antérieure du corps chauffant (2'), portant l'élément chauffant, et à l'intérieur de l'élément chauffant sur la face interne d'une paroi de l'élément chauffant, dont la face externe est appliquée contre la panne (8').

8. Fer à souder suivant l'une des revendications précédentes, caractérisé par le fait que le capteur de mesure est un thermo-élément et que dans la poignée (1) est disposée une compensation de température qui compense des fluctuations de température dans la poignée, de manière à empêcher une erreur de mesure de la valeur réelle.

9. Fer à souder suivant la revendication 8, caractérisé par le fait que la compensation de température est réalisée par un fil résistant déterminé de façon appropriée et/ou semiconducteur.

10. Fer à souder suivant l'une des revendications précédentes, caractérisé par le fait que l'élément chauffant (2) est alimenté avec une tension alternative et qu'un redresseur est prévu pour l'limentation du système électronique de commande (5) à partir de cette tension alternative.

11. Fer à souder suivant l'une des revendications 1 et 6 à 10, caractérisé par le fait que la partie de fixation (16) formant le corps de refroidissement porte, à son extrémité opposée au corps chauffant (2), un circuit intégré hybride qui comprend le système électronique de commande et l'interrupteur de puissance à semi-conducteur.

12. Fer à souder suivant la revendication 11, caractérisé par le fait que le circuit hybride est réuni d'une seule pièce avec le corps de refroidissement.

# FIG.1

# FIG.2

# FIG.3

# FIG.4

0 021 046